# EUROPEAN PATENT SPECIFICATION

(11) **EP 0 781 505 B1**
(45) Date of publication and mention of the grant of the patent: **20.12.2000**
(21) Application number: 96610051.3
(22) Date of filing: 23.12.1996
(51) Int. Cl.: A01C 7/20, A01C 7/08

(54) **A drill coulter unit**
Säschare
Soc de semoir

(30) Priority: 28.12.1995 DK 148395
(43) Date of publication of application: 02.07.1997
(73) Proprietor: KONGSKILDE MASKINFABRIK A/S, DK-4180 Soro (DK)
(72) Inventor: Olsen, Asger Schellerup, 4180 Soro (DK)
(74) Representative: Raffnsoee, Knud Rosenstand

(56) References cited:
- EP-A- 0 640 274
- DE-A- 1 557 979
- DE-A- 2 025 039

## Description

The present invention relates to a drill coulter unit for a seed drill with preferably pneumatic transport of granulated material to the coulters, said unit comprising a sowing foot, a spring, a holder with a coupling for releasable, rigid coupling of the holder to a carrier, and a tube piece which at its one end is connected with the sowing foot and at its other end is connected with the holder in such a way that it is pivotable against a bias about an axis, which in a desired operational position is horizontal, the spring being in engagement with the holder and the tube piece, and the tube piece having at its other end a connection piece for a hose, whereby the tube piece, the holder and the spring through their mutual connections form a possibly degenerated circle, wherein the coupling of the holder is positioned outside said circle. The granulated material may be seed grain, fertilizers or other products to be spread on a field. A drill coulter unit of this kind is known from DE-A-20 25 039.

In a known seed drill which is manufactured by the present Applicant, drill coulters are provided which are placed in two rows transversely to the direction of travel during operation. The drill coulters consist of a sowing foot which is fixedly connected with a tube piece. The tube pieces are available in two different lengths, whereby is achieved, by mounting the drill coulters by means of separate, different holders on a carrier in form of a transverse beam and by alternatingly using drill coulters with a long and a short tube piece, that the drill coulters are placed in two transverse rows mutually spaced. Each drill coulter may with its accompanying tube piece swing backwards against the bias from a spring which is fastened to the tube piece as well as to a fitting next to the holder. Mounting and replacement of a drill coulter is a comparatively complicated process on account of the many components.

The object of the present invention is to provide a drill coulter unit which facilitates the mounting and replacement of a drill coulter and which further results in a simplification of the production.

US-A-4 493 273 discloses a drill coulter unit comprising most of the features stated in the preamble of claim 1. The drill coulter described there is adapted to yield both sideways and backwards/upwards by collision with an obstacle like a stone in the field. The holder is constituted by an angularly bent plate which when mounted extends along two adjacent sides of a quadrangular tube in the seed drill and is kept in place by a likewise angularly bent clamp which extends along the two remaining sides of the tube and is fastened to the ends of the two legs of the clamp by means of nuts. Thereby, the holder, the spring and the tube piece form a closed circle around the quadrangular tube when the drill coulter unit is mounted. This means that it is not possible to assemble the drill coulter unit prior to the mounting.

By positioning the coupling of the holder outside said circle mentioned in the first paragraph is obtained that the sole requirement for replacement of a drill coulter unit is that the hose which by means of pneumatic transport conveys granulated material through the tube piece to the sowing foot is detached from the connection piece, following which the holder is detached from the carrier, a new drill coulter unit is coupled onto the carrier, and the hose is connected with the connection piece of the new drill coulter unit. Hereby, it becomes considerably easier to replace a drill coulter e.g. on account of breakdown during operation, which makes the subsequent, undesired interruption as short as possible.

DE-A-42 37 093 discloses a seed drill, in which each drill coulter is exchangeably accommodated in its own holder. It is thereby possible to mount drill coulters of varying types in the holder. Holder and drill coulters are, however, not part of a unit like in the present invention.

In accordance with the present invention the holder is adapted to take up one out of two positions relative to the tube piece, whereby the sowing foot in horizontal plane in a similar way takes up one out of two positions at a varying distance from the carrier when the drill coulter unit has been mounted. In one embodiment the holder is in one of the two positions turned 180° around a vertical axis relative to the other position.

Hereby is obtained that a given drill coulter unit may substitute a drill coulter unit in any of two adjacent transversely placed rows as the holder, if the drill coulter unit is to be placed in one row, is placed in one position in relation to the tube piece, and in the other position in relation to the tube piece if the drill coulter unit is to be placed in the other row.

The foot and the tube piece is in a preferred embodiment manufactured in one piece from two halves of sheet material welded together, which sheet material may be shaped for instance by deep-drawing. The sowing foot may furthermore be provided with a loose wear nose or sowing shoe which is known per se.

The invention will be explained in the following by means of an example of an embodiment with reference to the drawing, in which
Fig. 1 shows a cross-section of a beam with two drill coulter units according to the invention,
Fig. 2 the same parts as Fig. 1 in an exploded view, and
Fig. 3 an enlarged, exploded sectional view seen in the direction of the arrow III in Fig. 1.

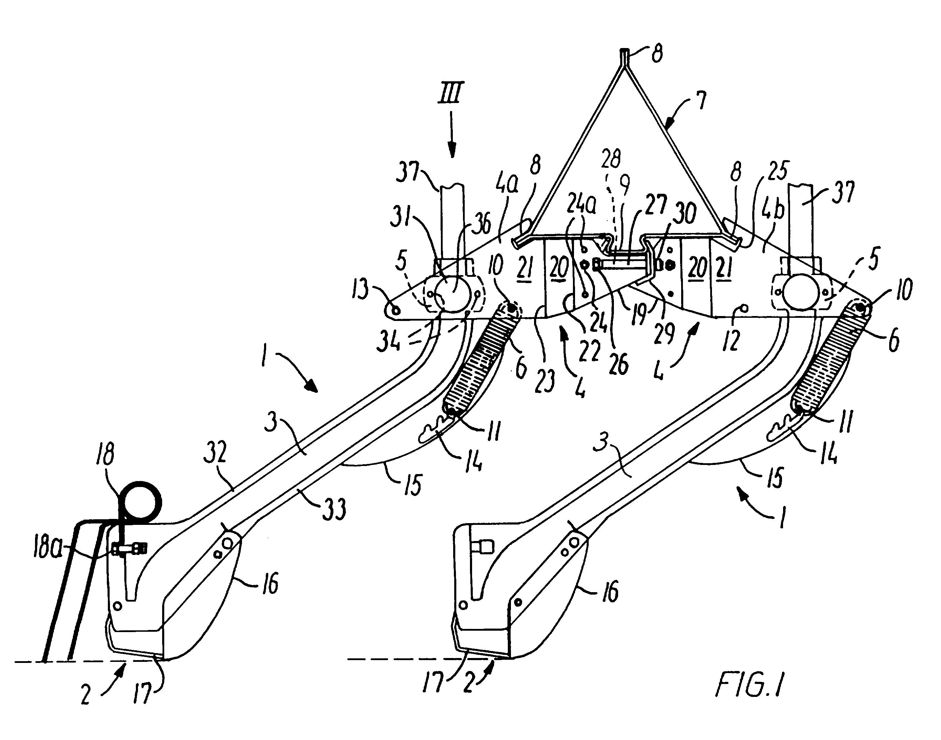

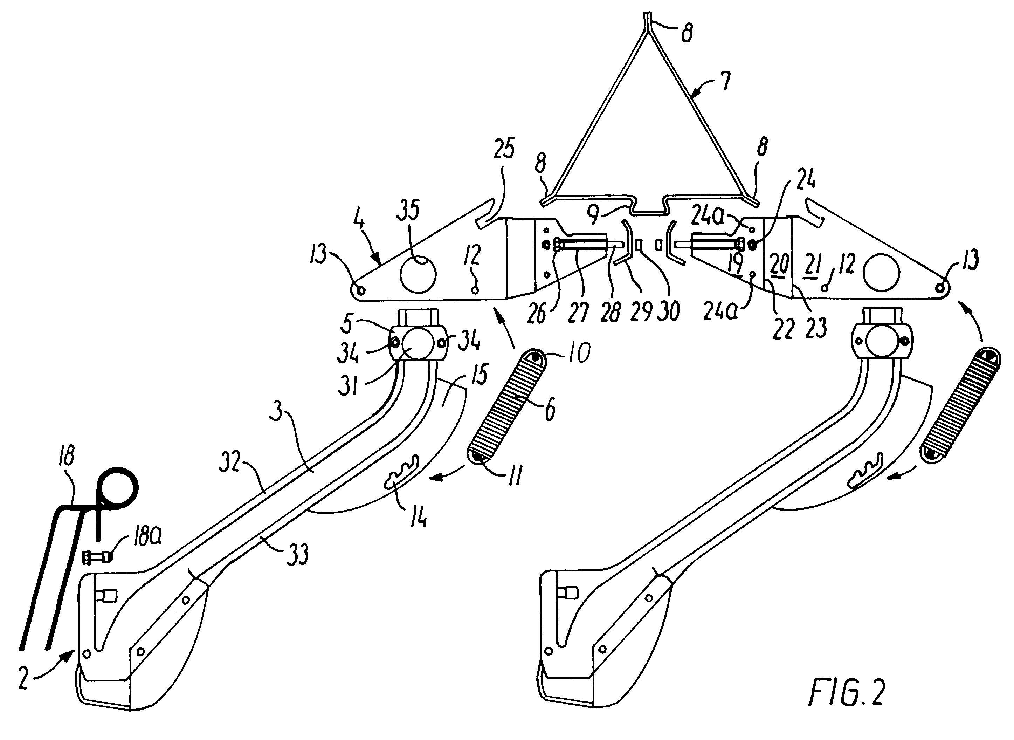

Figs 1 and 2 are sectional views through a triangular beam of sheet material, which is assembled at the corners of the beam 7, flanges 8 being thus established. The downwards facing plate in the beam 7 has a central, dovetailed, longitudinal protrusion 9.

Figs 1 and 2 furthermore show two drill coulter units 1, which both comprise a sowing foot 2, which is integral with a tube piece 3 which is mounted in a holder 4 (Fig. 1) by means of a bearing block 5. A spring 6 extends between two pins 10, 11, which extend perpendicularly to the plane of the drawing. The pin 10 may be fastened in the holder 4 in two different positions 12, 13, and the pin 11 may be placed in grooves 14 in flanges 15 extending from the tube piece 3. The groove 14 has several (in the example shown three) notches, whereby it becomes possible to adjust the spring tension. The upper edge of the flanges 15 acts as stop for the turning of the tube piece 3 in the direction of the spring force when touching the holder 4.

The holder 4 is made from two pieces of sheet material, which are mirror-symmetrical relative to the plane of the drawing, and comprises three substantially plane sections 19, 20, 21 which are separated by bendings 22, 23. One half 4a of the two halves 4a, 4b of the holder is shown in the holder which is left in Figs 1 and 2, whereas the half 4b is seen from the holder being to the right in Figs 1 and 2.

The halves 4a, 4b are designed such that the sections 19 are abutting, guided by the two guide pins 24a and tightened by means of a screw 24. The sections 20 diverge mutually in the direction towards the sections 21 which extend in parallel with a certain mutual spacing.

The section 21 has recesses 25 for receiving one flange 8 of the beam 7 when the holder is mounted as will be seen in Fig. 1. The section 19 has a recess 26 and an elongate bead 27, whereby a tube is formed between the sections 19 by the two halves 4a and 4b. When the two halves 4a and 4b are assembled, a pin 28 is inserted in such a way that it in the assembled holder 4 has its head in the recess 26 and from there extends through the tube between the beads 27. The end of the pin 28 protrudes from the holder and is used at the mounting of the holder 4 on the beam 7, a stop 29 in form of a small piece of bent sheet material with a central hole being attached to the pin 28 by means of a nut 30, such that it engages the dovetailed protrusion 9 on the beam 7 and the holder 4 as shown in Fig. 1.

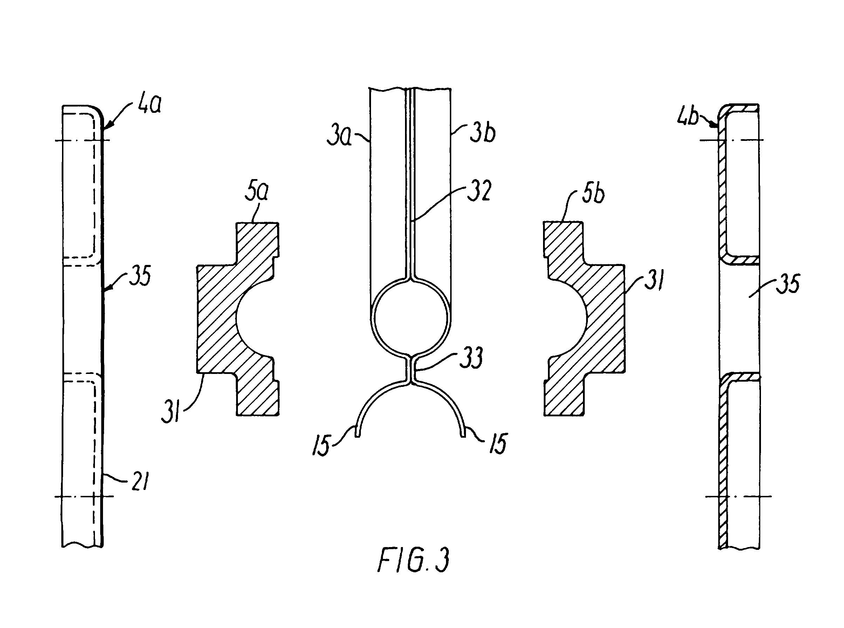

Fig. 3 illustrates the bedding of the tube piece 3 in the holder 4. Fig. 3 thus shows a part of the two halves 4a and 4b and to be more precise a part of their sections 21. The tube piece 3 is likewise seen to comprise two halves 3a, 3b, which for instance may be manufactured by deep-drawing of sheet pieces which are then spot-welded to each other by flanges 32 and 33. The flange 33 is over a part of the tube piece 3 integral with the flanges 15. The bearing block 5 consists of two identical halves 5a, 5b which are assembled around the tube piece 3, for instance by means of screws 34 which are tightened so that the tube piece cannot move in its axial direction. The two halves 5a and 5b are on the sides facing each other designed to receive the tube piece 3, whereby the flanges 32, 33 prevent the tube piece 3 from turning in the bearing block 5. The bearing block 5 is provided with bearing pins 31 which in the assembled state of the drill coulter unit 1 extend through holes 35 in the sections 21, whereby the tube piece 3 may swing relative to the holder 4 around the axis 36 of the bearing pins 31.

By assembling the two halves 4a, 4b of the holder 4 it is possible to turn the holder 4 and the tube piece 3 relative to each other, either as shown to the right or as shown to the left in Figs 1 and 2. By turning the holder 4 in one way or the other, it is obtained as will also appear from the figures that the sowing foot 2 is placed in one out of two positions.

The sowing foot 2 is in a manner known per se provided with a sowing shoe 16 and an anti-blocking clamp 17. A long finger 18 is mounted directly on the drill coulter by means of a pin 18a which extends through a tube formed in the same way as the tube for the pin 28.

When a drill coulter unit 1 is mounted on the beam 7, the upper end of the tube piece 3 is connected with a connecting piece 37 of a hose for instance pneumatic supply of sowing seed.

With the drill coulter unit according to the invention is obtained that a drill coulter unit 1 may be replaced for instance in case of damage, by just removing the connecting piece 37 and loosening the nut 30. By loosening the nut 30 it becomes further possible to displace the drill coulter unit 1 laterally along the beam 7. It is thus very easy to move the drill coulter units 1 if another row width is desired when sowing.

The drill coulter pressure may be individually adjusted to the individual drill coulter units by moving the pin 11 which holds the spring 6 between the notches in the groove 14. The drill coulter pressure is varied centrally simultaneously in respect of all the drill coulters on the beam 7 by raising and lowering the beam 7.

## Claims

1. A drill coulter unit (1) with preferably pneumatic transport of granulated material to the coulters, said unit comprising a sowing foot (2), a spring (6), a holder (4) with a coupling for releasable, rigid coupling of the holder to a carrier (7), and a tube piece (3) which at its one end is connected with the sowing foot (2) and at its other end is connected with the holder (4) in such a way that it is pivotable against a bias about an axis (36), which in a desired operational position is horizontal, the spring (6) being in engagement with the holder (4) and the tube piece (3), and the tube piece (3) having at its other end a connection piece for a hose (37), whereby the tube piece (3), the holder (4) and the spring (6) through their mutual connections form a possibly degenerated circle, wherein the coupling of the holder (4) is positioned outside said circle, **characterized** in that the holder (4) is adapted to take up one out of two positions relative to the tube piece (3), whereby the sowing foot (2) in horizontal plane in a similar way takes up one out of two positions at a varying distance from the carrier (7) when the drill coulter unit has been mounted.

2. A drill coulter unit according to claim 1, **characterized** in that the holder (4) in one of the two positions is turned 180° around a vertical axis relative to the other position.

3. A drill coulter unit according to claims 1 or 2, **characterized** in that the major part of the sowing foot (2) and the tube piece (3) is manufactured in one piece from two halves (3a, 3b) of sheet material welded together.

## Patentansprüche

1. Säschare (1) mit vorzugsweise pneumatischem Transport von granuliertem Material zu den Scharen, umfassend einen Säfuss (2), eine Feder (6), einen Halter (4) mit einer Kopplung für auslösbares, starres Koppeln des Halters an einen Träger (7), und ein Rohrstück (3), dessen eines Ende mit dem Säfuss (2) verbunden und dessen anderes Ende mit dem Halter (4) derart verbunden ist, dass das Rohrstück gegen die Federkraft um eine in einer gewünschten Betriebsstellung waagrechte Achse schwenkbar ist, und die Feder (6) im Eingriff mit dem Halter (4) und dem Rohrstück (3) ist, und das Rohrstück (3) an seinem anderen Ende ein Anschlussstück für einen Schlauch (37) aufweist, wodurch das Rohrstück (3), der Halter (4) und die Feder (6) durch ihre gegenseitigen Verbindungen einen gegebenenfalls entarteten Kreis bilden, worin sich die Kopplung des Halters (4) ausserhalb des Kreises befindet, dadurch **gekennzeichnet**, dass der Halter (4) dazu vorgesehen ist im Verhältnis zum Rohrstück (3) eine von zwei Stellungen einzunehmen, wobei der Säfuss (2) nach Montieren der Säschare in waagrechter Ebene eine von zwei Stellungen in unterschiedlichem Abstand vom Träger (7) einnimmt.

2. Säschare nach Anspruch 1, dadurch **gekennzeichnet**, dass der Halter (4) in einer der zwei Stellungen um eine senkrechte Achse im Verhältnis zu der anderen Stellung 180° gedreht ist.

3. Säschare nach Anspruch 1 oder 2, dadurch **gekennzeichnet**, dass der grösste Teil des Säfusses (2) und des Rohrstückes (3) in einem einzigen Stück aus zwei zusammengeschweissten Halbteilen (3a, 3b) von Blechmaterial hergestellt ist.

## Revendications

1. Soc de semoir (1) avec préférablement transport pneumatique de matériaux granulés aux socs de semoir, ledit soc comprenant un pied de semis (2), un ressort (6), un support (4) avec un couplage pour accouplement fixe et débrayable du support à un porteur (7), et un bout de tube (3) qui à son extrémité est relié au pied de semis (2) et à son autre extrémité est relié au support (4) d'une telle manière qu'il peut pivoter contre un effet de ressort autour d'un axe (36), qui dans une position de travail voulue est horizontal, le ressort (6) étant en engrenage avec le support (4) et le bout de tube (3), et le bout de tube (3) présentant à son autre extrémité un raccord pour un tuyau (37), le bout de tube (3), le support (4) et le ressort (6) par leurs liaisons mutuelles formant un cercle éventuellement dégénéré, où l'accouplement du support (4) est situé en dehors dudit cercle,
**caractérisé** en ce que le support (4) est adapté à occuper l'un de deux positions par rapport au bout de tube (3), le pied de semis (2) au plan horizontal d'une manière similaire occupant l'une de deux positions à une distance variable du porteur (7) lorsque le soc de semoir a été monté.

2. Soc de semoir selon la revendication 1,
**caractérisé** en ce que le support (4) dans l'une des positions est tourné 180° autour d'un axe vertical par rapport à l'autre position.

3. Soc de semoir selon la revendication 1 ou 2,
**caractérisé** en ce que la plus grande partie du pied de semoir (2) et le bout de tube (3) est produite d'une seule pièce depuis deux moitiés (3a, 3b) de matériaux de plaque jointes par soudage.
